# FASCICULE DE BREVET EUROPEEN

(11) **EP 2 126 407 B1**
(45) Date de publication et mention de la délivrance du brevet: **25.08.2010**
(21) Numéro de dépôt: 08706984.5
(22) Date de dépôt: 10.01.2008
(51) Int. Cl.: F16G 11/10

(54) **DISPOSITIF DE POSITIONNEMENT D'UN ELEMENT SUR UN CABLE**
VORRICHTUNG ZUR POSITIONIERUNG EINES GLIEDS AN EINEM KABEL
DEVICE FOR POSITIONING A MEMBER ON A CABLE

(30) Priorité: 23.01.2007 FR 0700447
(43) Date de publication de la demande: 02.12.2009
(73) Titulaire: A. Raymond et Cie., 38000 Grenoble (FR)
(72) Inventeur: TRESORIER, Jean-François, F-38130 Echirolles (FR); GIRARD, Didier, F-69004 Lyon (FR); GONDRE, Marc, F-38270 Bellegarde Poussieu (FR); GELIBERT, Stéphane, F-38360 Sassenage (FR)
(74) Mandataire: Rüttgers, Joachim
(86) Numéro de dépôt international: PCT/EP2008/000134
(87) Numéro de publication internationale: WO 2008/089891

(56) Documents cités:
- EP-A1- 0 620 381
- EP-B1- 1 419 324
- WO-A-01/15577
- DE-U1- 20 215 611
- US-A- 694 818
- US-A- 5 345 657

## Description

### Domaine technique de l'invention

L'invention relève du domaine des dispositifs de positionnement d'un élément sur un câble, comportant au moins :
- un boîtier, dans lequel s'insère le câble,
- et un organe de blocage du câble, par déformation du câble à l'intérieur du boîtier.

### État de la technique

Pour la fixation d'un élément sur un câble, il est connu depuis longtemps des systèmes comportant un manchon solidaire de l'élément et à travers lequel passe le câble. Le blocage du manchon sur le câble se fait par l'intermédiaire d'une vis radiale, traversant la paroi du manchon et qui vient compresser le câble et assurer sa fixation. Cependant, l'inconvénient majeur de ce type de système est le maintien de l'élément à fixer sur le câble et le vissage dans le manchon, qui doivent être effectués en même temps. Il en résulte alors une grande difficulté de mise en oeuvre et d'utilisation.

Le brevet EP 1 419 324 décrit un autre type de dispositif de positionnement d'un élément sur un câble. Le dispositif comporte un système de coincement du câble par des dentures, qui agissent directement sur le câble. Cependant, ce système nécessite l'utilisation d'une boucle du câble, pour positionner le dispositif sur le câble. Il faut donc utiliser les deux brins du câble, ce qui engendre des difficultés de mise en oeuvre et de positionnement.

Le brevet US 5 345 657 décrit un dispositif de positionnement utilisant un autre principe de coincement par cisaillement du câble. Le dispositif comporte une partie fixe et une partie mobile ayant deux positions distinctes, une première position de repos, dans laquelle les orifices associés aux deux parties sont en regard et permettent le passage du câble, et une seconde position de blocage, dans laquelle la partie mobile déforme le câble et le coince à l'intérieur de la partie fixe. Cependant, l'utilisation d'un tel dispositif est généralement réservée à des câbles souples du type corde ou cordon. De plus, le maintien sur le câble ne peut pas subir d'efforts mécaniques trop importants.

Le brevet EP 0 620 381 décrit également un dispositif de positionnement d'un élément sur un câble utilisant le principe du coincement du câble par l'intermédiaire de crans sur des parties flexibles. Le dispositif comporte un boîtier fixe, comportant des crans sur ses parois internes latérales, et un élément mobile, coulissant à l'intérieur du boîtier fixe. Le câble est enroulé autour de l'élément mobile et le câble vient se coincer entre les crans et l'élément mobile, après introduction de l'élément mobile dans le boîtier fixe. Cependant, ce type de dispositif nécessite également l'utilisation de deux brins du câble pour fonctionner, il en résulte alors des difficultés de mise en oeuvre.

Un dispositif selon le préambule de la revendication 1 est décrit dans le document US 694818.

### Objet de l'invention

L'invention a pour but de remédier à l'ensemble des inconvénients précités et a pour objet la réalisation d'un dispositif de positionnement d'un élément sur un câble, qui soit facile à mettre en oeuvre, simple d'utilisation et qui permette une fixation optimale, tout en répondant aux différentes normes de sécurité.

L'objet de l'invention est caractérisé en ce que le dispositif comporte :
des moyens métalliques d'immobilisation permettant d'immobiliser un câble lorsque celui-ci est inséré dans le boîtier, par rapport à l'élément à positionner sur le câble.

Selon un mode particulier de réalisation de l'invention, lesdits moyens d'immobilisation comportent au moins :
- une plaquette métallique, montée dans une cavité du boîtier,
- et une vis métallique dotée d'une tête, ladite vis étant insérée à travers la plaquette métallique dans un trou débouchant et fixée dans un orifice associé de l'élément et le câble étant coincé entre la plaquette métallique et ladite tête de la vis.

De tels moyens métalliques d'immobilisation permettent de former un ensemble, composé de l'élément, de la plaquette, de la vis et du câble, qui reste solidaire en cas d'incident et d'une éventuelle détérioration du boîtier, afin de répondre notamment aux différentes normes de sécurité.

Selon des caractéristiques de l'invention prises isolément ou en combinaison :
- la plaquette métallique est immobile en rotation par rapport au boîtier,
- la tête de la vis est logée dans un évidement du boîtier,
- le boîtier est muni d'un canal de passage du câble comportant au moins une extrémité chanfreinée, au niveau d'un bord du boîtier, et des portions évasées, débouchant au niveau dudit logement.

De telles caractéristiques permettent notamment un blocage optimal du câble dans le boîtier et sur l'élément associé.

Selon d'autres caractéristiques de l'invention, lesdits moyens de verrouillage comportent des moyens d'accrochage, par exemple des dents, solidaires de l'organe de blocage, coopérant avec des moyens de retenue, par exemple des crans anti-retour, faisant saillie dans ledit logement.

De telles caractéristiques permettent notamment d'optimiser la fixation de l'organe de blocage à l'intérieur du boîtier et de verrouiller sa position dans le logement correspondant.

Selon un mode de réalisation préférentiel de l'invention, le boîtier comporte deux parties articulées par une charnière et superposées, dans une position d'utilisation, pour former au moins ledit logement.

Un tel boîtier réalisé en deux parties est simple à fabriquer, notamment par moulage, et permet une grande simplicité de mise en oeuvre.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
La figure 1 est une vue de face d'un mode particulier de réalisation d'un dispositif de positionnement d'un élément sur un câble selon l'invention.
La figure 2 est une vue de côté en coupe du dispositif de positionnement selon la figure 1.

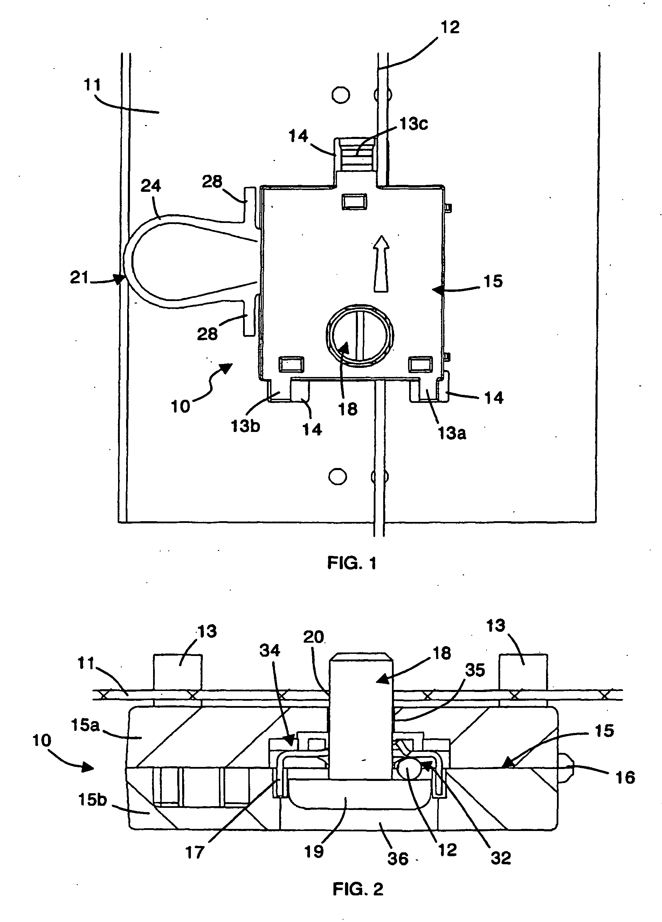

Les figurés 3 et 4 sont des vues, respectivement en perspective et de dessus, du boîtier du dispositif de positionnement selon les figures 1 et 2 avant le positionnement de l'élément sur le câble.

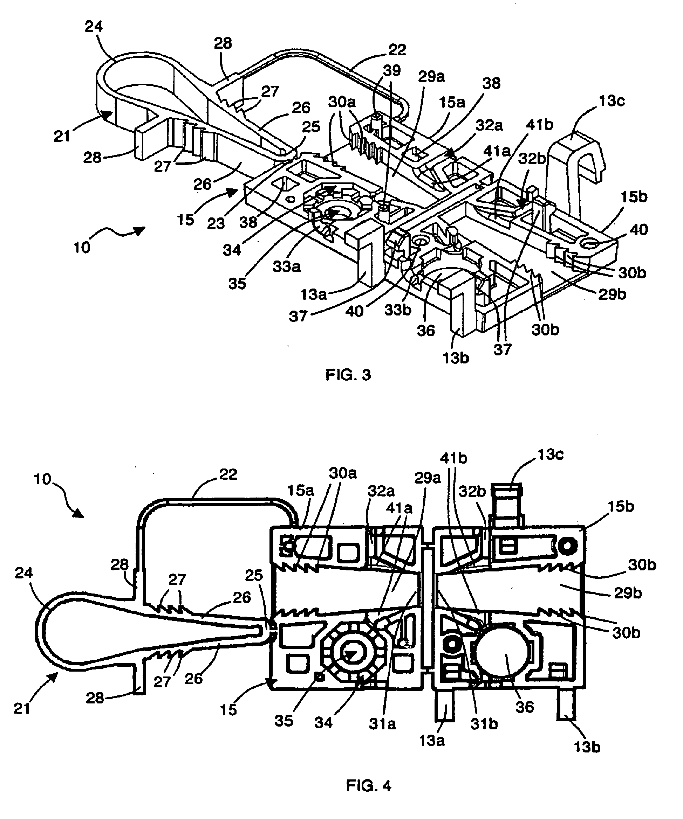

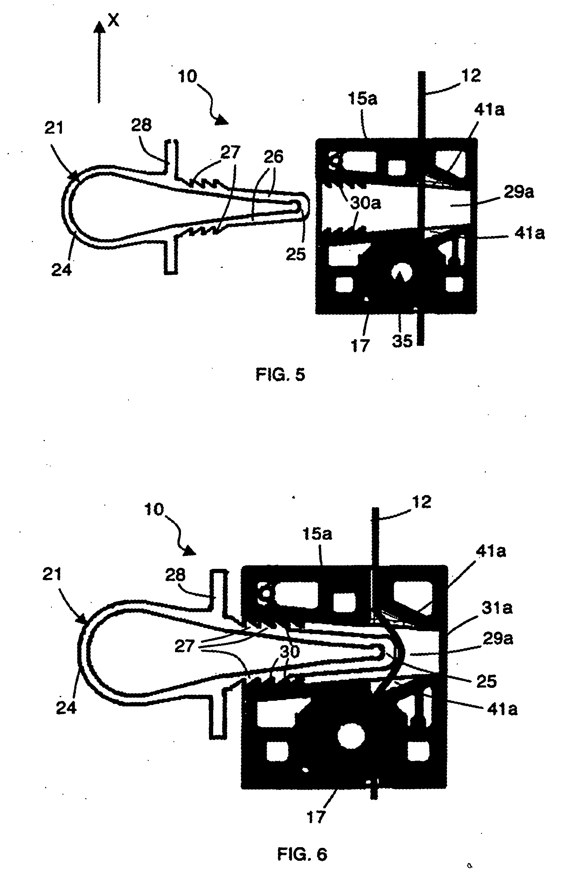

Les figures 5 et 6 représentent schématiquement des vues de dessus d'une partie du boîtier selon les figures 3 et 4, illustrant le blocage du câble dans le boîtier du dispositif de positionnement selon les figures 1 à 4.

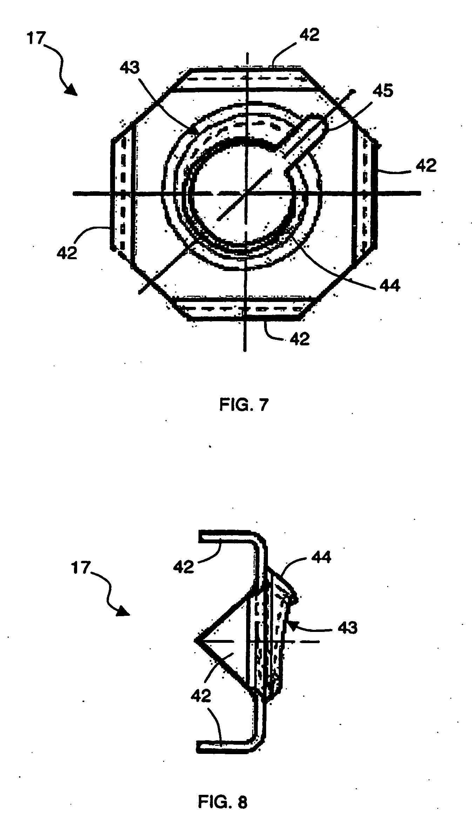

Les figures 7 et 8 sont des vues, respectivement de dessus et de côté, de la plaquette métallique du dispositif de positionnement selon les figures 1 à 6.

### Description d'un mode préférentiel de l'invention

En référence aux figures 1 à 8, le dispositif de positionnement 10 selon l'invention est destiné notamment à suspendre un élément 11, par exemple une plaque de luminaire industriel, sur un câble 12, par exemple un fil métallique, une corde, un cordon, ou tout autre type de câble analogue. Sur les figures 1 et 2, le dispositif de positionnement 10 est dans une position d'utilisation, fixé sur l'élément 11 et sur le câble 12. Sur les figures 3 et 4, le dispositif de positionnement 10 est représenté dans une position initiale de fin de fabrication, en attente d'assemblage et de positionnement sur le câble 12 et sur l'élément 11.

Sur la figure 1, le dispositif de positionnement 10 est fixé sur l'élément 11 par des pattes de fixation 13, de préférence deux pattes de fixation 13a, 13b rigides et une patte de fixation 13c flexible, conformée en crochet (figure 3), destinées à se clipser dans des ouvertures 14 prédécoupées dans l'élément 11, afin d'assurer une fixation efficace du dispositif 10. Les pattes de fixation 13a, 13b rigides sont placées, de préférence, sur un même côté du dispositif 10 (figures 1 et 3) et la patte de fixation 13c flexible est disposée sur un côté du dispositif 10 opposé aux deux autres pattes de fixation 13a, 13b rigides. Dans le mode particulier de réalisation du dispositif de positionnement 10 représenté sur les figures 1 à 8, le dispositif 10 comporte un bottier 15 en deux parties 15a, 15b, articulées par une charnière 16. Un tel boîtier 15 est notamment simple à réaliser d'un point de vue fabrication, notamment par moulage, et certains éléments constitutifs du boîtier 15 sont ainsi formés en deux parties, de façon symétrique par rapport à la charnière 16, dans les deux parties 15a et 15b du boîtier 15, comme décrit ci-après.

Comme représenté plus particulièrement sur les figures 1, 2 et 7, 8, le principe du dispositif 10 consiste à bloquer le câble 12 entre une plaquette métallique 17, par exemple de forme octogonale (figures 7 et 8), insérée dans le boîtier 15 et percée en son centre (figures 5 à 8), et une vis métallique 18, plus particulièrement une tête 19 de la vis 18, de préférence une vis à tôle. La tête 19 de la vis 18 est, de préférence, fendue pour faciliter le serrage de la vis 18 et améliorer la mise en oeuvre du dispositif 10 (figure 1). L'élément 11 comporte un orifice 20 (figure 2), présentant un pas de vis associé à la vis 18, de sorte que l'ensemble composé de l'élément 11, du câble 12, de la plaquette 17 et de la vis 18 forme un ensemble solidaire immobile en matériau métallique.

Le boîtier 15 étant, de préférence, en matériau plastique thermoformé, en cas d'incendie ou de tout autre incident entraînant, par exemple, la fonte du dispositif 10, le maintien de tout objet associé à l'élément 11 sur le câble 12, par l'intermédiaire des moyens d'immobilisation, à savoir la plaquette métallique 17 et la vis métallique 18, est alors garanti, en évitant que l'objet ne tombe au sol, de sorte que la sécurité reste assurée.

Sur les figures 3 et 4, le dispositif de positionnement 10 de l'élément 11 sur le câble 12 comporte une goupille 21, jouant le rôle d'un organe de blocage du câble 12 à l'intérieur du boîtier 15 (figures 5 et 6). La goupille 21 est réalisée, de préférence, dans un même matériau que le boîtier 15, lors d'une même étape de fabrication, par exemple par moulage. La goupille 21 est fixée, de préférence à la partie 15a du boîtier 15 par l'intermédiaire, par exemple, d'un filament 22, reliant un côté de la goupillé 21 à un bord de la partie 15a du boîtier 15. La goupille 21 est également fixée à la partie 15a du boîtier 15 par l'intermédiaire d'un petit picot 23, reliant l'extrémité de la goupille 21 à un autre bord de la partie 15a du boîtier 15, opposé au bord articulé par la charnière 16.

La goupille 21 est conformée selon une boucle fermée déformable et comporte une tête 24 flexible, de forme sensiblement arrondie, une extrémité d'actionnement 25, de préférence également de forme arrondie et de dimensions plus petites que la tête 24, venant en contact avec le câble 12 à l'intérieur du boîtier 15, et deux branches latérales 26 flexibles, reliant la tête 24 et l'extrémité d'actionnement 25.

Les branches 26 de la goupille 21 sont munies de dents 27, jouant le rôle de moyens d'accrochage à l'intérieur du boîtier 15 et destinées à coopérer avec des moyens de retenue complémentaires, formés à l'intérieur du boîtier 15. Les branches 26 sont dotées également de butées 28 transversales, s'étendant sensiblement perpendiculairement aux branches 26 et destinées à venir en contact contre le bord de la partie 15a du boîtier 15, lors de l'utilisation de la goupille 21, comme décrit ci-après en référence aux figures 5 et 6. Les butées 28 sont notamment des butées de fin de course placées sur les branches latérales 26 de la goupille 21, afin de définir la course maximale de la goupille 21 à l'intérieur du boîtier 15, pour éviter toute déformation irréversible du câble 12.

Le boîtier 15 comporte un logement 29, dans lequel s'insère la goupille 21, comprenant une première demi-coque 29a, formant une première partie du logement 29, réalisée dans la partie 15a du boîtier 15, et une seconde demi-coque 29b, symétrique à la demi-coque 29a par rapport à la charnière 16, formant la seconde partie du logement 29 et réalisée dans la partie 15b du bottier 15 du dispositif 10. Le logement 29 est muni de crans 30, jouant le rôle des moyens de retenue ci-dessus, coopérant avec les dents 27 de la goupille 21, lors de l'insertion de la goupille 21 dans le logement 29 du boîtier 15.

La première partie 29a du logement 29 comporte une pluralité de crans 30a adjacents, formés au niveau de l'extrémité ouverte du logement 29 et la seconde partie 29b du logement 29 comporte une pluralité de crans 30b adjacents, formés au niveau de l'extrémité ouverte du logement 29. Après pivotement de la partie 15b du boîtier 15 autour de la charnière 16 (figures 1 et 2), les parties 15a et 15b du boîtier 15 se superposent, dans la position d'utilisation du dispositif 10, de sorte que le logement 29 a une épaisseur correspondant à l'épaisseur des deux parties 29a, 29b associées, et de sorte que les crans 30a, 30b se superposent également. Les crans 30 réunis définissent des distances d'insertion et de blocage différentes de la goupille 21 à l'intérieur du boîtier 15 (figures 5 et 6).

Sur les figures 3 et 4, le logement 29 de la goupille 21 présente un fond 31 plein et la charnière 16, articulant les deux parties 15a, 15b du boîtier 15, s'étend alors tout le long du bord correspondant du boîtier 15. Plus particulièrement, la première demi-coque 29a du logement 29 présente une première partie 31 a du fond 31 et la seconde demi-coque 29b du logement 29 présente une seconde partie 31 b du fond 31. Dans une variante de réalisation non représentée, le fond 31 du logement 29 peut être ouvert, la charnière 16 ne s'étend alors pas tout le long du bord correspondant du boîtier 15, mais comporte au moins deux zones de liaison formant charnières, disposées de part et d'autre du logement 29, lequel est alors débouchant.

Sur les figures 2 à 4, le boîtier 15 du dispositif 10 comporte également un canal de passage 32, de préférence de forme sensiblement cylindrique, composé d'un premier demi-canal 32a, formé dans la partie 15a du boîtier 15, et d'un second demi-canal 32b, formé dans la partie 15b du boîtier 15 (figure 3). Le canal de passage 32 du câble 12 traverse sensiblement perpendiculairement le logement 29 à l'intérieur du boîtier 15 (figures 5 et 6). Chaque demi-canal 32a, 32b est donc formé perpendiculairement à la partie 29a, 29b correspondante du logement 29, de sorte que chaque demi-canal 32a, 32b comporte deux parties symétriques s'étendant de part et d'autre de la partie 29a, 29b associée du logement 29 (figure 4).

Par ailleurs, comme représenté plus particulièrement sur les figures 3 à 6, chaque demi-canal 32a, 32b comporte un chanfrein 33a, 33b, formé au niveau du bord correspondant de la partie 15a, 15b associée du boîtier 15. Les deux chanfreins 33a, 33b forment ainsi une ouverture sensiblement en forme de tronc de cône, pour le canal de passage 32 du câble 12, de manière notamment à faciliter l'insertion du câble 12.

Sur les figures 3 et 4, chaque demi-canal 32a, 32b comporte également deux portions évasées 41 a, 41 b débouchant au niveau des parties 29a, 29b correspondantes du logement 29. Les portions évasées 41 a, 41 b s'étendent, de préférence, en direction des parties 31a, 31b correspondantes du fond 31 du logement 29, c'est-à-dire dans le sens d'insertion de la goupille 21 et dans le sens de déformation du câble 12 (figure 6). De telles portions évasées 41 a, 41 b permettant notamment d'absorber une partie de la déformation du câble 12, lorsque la goupille 21 exerce son action de blocage (figure 6), et permettent notamment de réduire l'effort exercé par le monteur du dispositif 10 sur la goupille 21.

Le boîtier 15 du dispositif de positionnement 10 comporte également une cavité 34 pour loger la plaquette métallique 17 dans la partie 15a du boîtier 15. Sur les figures 3 et 4, la plaquette 17 n'est pas représentée pour des raisons de clarté, tandis que, sur les figures 5 et 6, la plaquette métallique 17 est représentée schématiquement par une couleur différente du boîtier 15, représenté en noir. La cavité 34 de la plaquette 17 est prolongée par un trou 35 débouchant sur la surface inférieure de la partie 15a du boîtier 15.

Comme représenté plus particulièrement sur les figures 7 et 8, la plaquette métallique 17, de préférence de forme octogonale, comporte quatre pointes d'ancrage 42, de préférence de forme triangulaire, réparties de façon symétrique et régulière au niveau de quatre bords opposés définissant une partie du contour de forme octogonale de la plaquette 17 (figure 7). Les pointes d'ancrage 42 sont, de préférence, de forme triangulaire et font saillie sensiblement perpendiculairement de la plaquette 17 (figure 8), de sorte qu'elles s'insèrent dans le logement 34 associé de la partie 15a du boîtier 15, afin notamment d'empêcher la rotation de la plaquette métallique 17 par rapport au boîtier 15. La cavité 34 a, de préférence, la même forme que la plaquette métallique 17, à savoir une forme sensiblement octogonale, notamment pour optimiser l'immobilisation de la plaquette 17 par rapport au boîtier 15.

Sur les figures 7 et 8, la plaquette 17 comporte avantageusement un pas de vis 43, destiné à coopérer avec la vis 18, de préférence une vis à tôle, pour la fixation et le blocage sécurisé du câble 12 entre la tête 19 de la vis 18 et la plaquette métallique 17, comme décrit précédemment. Le trou 35 débouchant a un diamètre légèrement supérieur au diamètre de la vis 18 et le pas de vis 43 de la plaquette 17 est, de préférence, spécialement adapté pour les vis à tôle, à savoir du type communément appelé « escargot ». Sur les figures 7 et 8, le pas de vis 43 « en escargot » de la plaquette métallique 17 comporte typiquement un contour 44 relevé, délimitant le bord du perçage central de la plaquette 17 (figure 8) et une rainure 45, formée transversalement dans le contour 44, permettant notamment la déformation du contour 44 en contact avec la tête 19 de la vis 18 et destinée notamment à optimiser la liaison entre la vis 18 et la plaquette métallique 17.

Sur les figures 2 à 4, la seconde partie 15b du boîtier 15 comporte un évidement 36 de forme circulaire, traversant toute la partie 15b du boîtier 15 et destiné à recevoir la tête 19 de la vis 18, après serrage du câble 12 sur l'élément 11 et dans le boîtier 15 du dispositif 10 (figure 2). Le diamètre de l'évidemment 36 est légèrement supérieur au diamètre de la tête 19 de la vis 18 et l'épaisseur de la partie 15b du boîtier 15 est telle que la tête 19 de la vis 18 ne dépasse pas du boîtier 15, après assemblage de la vis 18 dans le dispositif 10, pour fixer l'élément 11 sur le câble 12 (figure 2).

Par ailleurs, comme représenté sur les figures 3 et 4, le boîtier 15 comporte, par exemple, trois crochets 37 d'assemblage, faisant saillie de la partie 15b du boîtier 15 et destinés à s'insérer dans des ouvertures 38 correspondantes de la partie 15a du boîtier 15, en vue de l'assemblage des deux parties 15a, 15b du boîtier 15. De plus, la partie 15a du boîtier 15 comporte avantageusement des picots de centrage 39, destinés à s'insérer dans des orifices correspondants 40 de la partie 15b du boîtier 15, afin notamment d'optimiser l'assemblage des deux parties 15a, 15b du boîtier 15 et d'assurer une fixation optimale du boîtier 15.

La mise en place et la mise en oeuvre du dispositif de positionnement 10 de l'élément 11 sur le câble 12 vont être décrites plus en détail au regard des figures 1, 2, 5 et 6. Sur les figures 5 et 6, uniquement la première partie 15a du boîtier 15 est représentée pour des raisons de clarté. Sur la figure 1, les pattes de fixation 13 du dispositif 10 sont tout d'abord clipser sur l'élément 11, plus particulièrement dans les ouvertures 14 prédécoupées dans l'élément 11.

Sur la figure 5, le câble 12 est ensuite inséré dans le dispositif 10 à travers le boîtier 15 au niveau du canal de passage 32 et, une fois le dispositif 10 placé au niveau souhaité sur le câble 12, la goupille 21 est insérée dans le logement 29 correspondant. Sur la figure 6, les dents 27 des branches latérales 26 de la goupille 21 coopèrent alors avec les crans 30 de retenue, formés à l'intérieur du boîtier 15. Sur la figure 6, l'extrémité d'actionnement 25 de la goupille 21 appuie alors sur le câble 12, qui s'enfonce en direction du fond 31 du logement 29, et le câble 12 se trouve alors légèrement déformé, sans être détérioré.

L'insertion de la goupille 21 à l'intérieur du logement 29 est notamment permise par la flexibilité des branches latérales 26 de la goupille 21. Il suffit d'appuyer sur la tête 24 de la goupille 21, selon l'axe X représenté sur la figure 5, pour obtenir le rapprochement des branches 26 et le passage dans les crans 30 successifs. Les crans 30, formés à l'intérieur du boîtier 15, et les dents 27 de la goupille 21 sont, de préférence, du type anti-retour, c'est-à-dire que l'insertion de la goupille 21 n'est possible que dans un sens, par déformation des branches latérales 26 de la goupille 21 à chaque passage d'un cran 30. Pour désengager la goupille 21, il est alors nécessaire d'appuyer sur la tête 24, selon l'axe X, afin de désengager l'ensemble des dents 27 des crans 30 et de tirer la goupille 21 dans le sens opposé à l'insertion.

L'enfoncement maximal de la goupille 21 dans le logement 29 est déterminé par les butées 28 faisant saillie des branches latérales 26 de la goupille 21 et venant en contact contre le bord associé du boîtier 15. Les butées 28 étant placées sur les branches latérales 26 de la goupille 21, la tête 24 de la goupille 21 est alors destinée à rester à l'extérieur du boîtier 15 du dispositif de positionnement 10, après le blocage du câble 12 à l'intérieur du boîtier 15. Les dents 27 de la goupille 21 permettent ainsi d'empêcher le retour de la goupille 21 à l'extérieur du boîtier 15. Les frottements engendrés par le câble 12 dans son canal de passage 32, plus particulièrement au niveau des portions évasées 41, permettent également d'immobiliser le câble 12.

Sur les figures 1 et 2, l'étape suivante consiste alors à introduire la vis 18 dans le trou 35 correspondant de la partie 15a du boîtier 15, au centre de la plaquette métallique 17, de sorte que le câble 12 se trouve alors emprisonné entre la plaquette métallique 17 et la partie inférieure de la tête 19 de la vis 18 (figure 2). Enfin, la vis 18 est fixée dans l'orifice 20 associé de l'élément 11, afin de le rendre solidaire de la plaquette métallique 17 du boîtier 15 du dispositif 10 et de former un ensemble solidaire, composé de la vis 18, de la plaquette 17, du câble 12 et de l'élément 11.

Le dispositif de positionnement 10 d'un élément 11 sur un câble 12, comme décrit ci-dessus, offre donc l'avantage principal de sécuriser la fixation de l'élément 11 sur le câble 12 par des éléments métalliques, à savoir la plaquette 17 et la vis 18. Par ailleurs, le dispositif de positionnement 10 ne nécessite l'utilisation que d'un seul brin de câble 12 et le positionnement du dispositif 10 sur l'élément 11, par encliquetage des pattes de fixation 13, et le blocage du câble 12 par la goupille 21 sont très simples à réaliser et de manière très rapide. Le dispositif 10 selon l'invention est donc très facile à fabriquer et à mettre en oeuvre, tout en restant conforme aux différentes normes de sécurité en vigueur.

L'invention n'est pas limitée aux différents modes de réalisation décrits ci-dessus. La forme et les dimensions des différents éléments constitutifs du dispositif 10, à savoir le boîtier 15, la goupille 21, la plaquette métallique 17, la vis 18, le canal de passage 32 du boîtier 15, le logement 29 du boîtier 15, etc., dépendent notamment de la taille du câble 12 et de l'élément 11 à positionner sur le câble 12. À titre d'exemple, la plaquette métallique 17 peut être de forme hexagonale et peut comporter, par exemple, uniquement trois pointes d'ancrage 42 réparties régulièrement sur le contour de la plaquette métallique 17.

Le dispositif peut comporter tout type de moyens de fixation du boîtier 15 sur l'élément 11, tout type de moyens métalliques d'immobilisation du câble 12 par rapport à l'élément 11 et tout type de moyens de verrouillage de la goupille 21 à l'intérieur du logement 29. La goupille 21 peut être formée par un tout autre type d'organe de blocage, tant qu'il comporte des moyens d'accrochage coopérant avec les moyens de retenue prévus à l'intérieur du +bottier 15.

Par ailleurs, le dispositif de positionnement 10 peut notamment comporter un boîtier 15 monobloc, le logement 29, les crans 30, le fond 31 du logement 29, le canal de passage 32, le chanfrein 33 et les portions évasées 41 sont alors formés en une seule partie, par exemple par moulage. L'élément 11 peut également comporter une pluralité d'ouvertures prédécoupées 14, coopérant avec autant de dispositif de positionnement 10 selon l'invention.

L'invention s'applique notamment au domaine de la fixation des luminaires industriels, dont les normes de sécurité sont très strictes d'un point de vue incendie. En effet, en cas d'incendie, la tenue mécanique de tout élément suspendu doit être optimal, c'est le cas avec le dispositif 10 selon l'invention qui permet de former un ensemble fixe composé de la vis 18, de la plaquette métallique 17, du câble 12 et de l'élément 11, le boîtier 15 étant en matériau plastique fusible.

L'invention peut s'appliquer également à la fixation de goulottes métalliques suspendues par des câbles. D'une façon générale, le dispositif de positionnement 10 selon l'invention s'applique à tout élément 11, destiné à être suspendu sur un câble 12 de tout type.

## Revendications

1. Dispositif de positionnement (10) d'un élément (11) sur un câble (12), comportant au moins :
- un boîtier (15), dans lequel peut être inséré un câble (12),
- et un organe de blocage (21) destiné à bloquer un câble (12) lorsqu'il est inséré dans le boîtier (15), par déformation du câble (12) à l'intérieur du boîtier (15),
- un logement (29) dans lequel s'insère l'organe de blocage (21) de telle sorte que lorsque un câble (12) est inséré dans le boîtier (15), celui-ci soit disposé à l'intérieur du boîtier (15) sensiblement perpendiculairement par rapport au logement (29),
et qui comporte également
- des moyens de verrouillage de l'organe de blocage (21) dans ledit logement (29),
- des moyens de fixation (13) du boîtier (15) permettant de fixer celui-ci sur un élément (11) à positionner sur un câble (12),
**caractérisé en ce que** le dispositif comporte en outre des moyens métalliques d'immobilisation permettant d'immobiliser le câble (12), lorsque celui-ci est inséré dans le boîtier (15), par rapport à l'élément (11) à positionner sur le câble (12).

2. Dispositif selon la revendication 1, **caractérisé en ce que** lesdits moyens de verrouillage comportent des moyens d'accrochage (27) solidaires de l'organe de blocage (21), coopérant avec des moyens de retenue (30), faisant saillie dans ledit logement (29).

3. Dispositif selon la revendication 2, **caractérisé en ce que** lesdits moyens d'accrochage de l'organe de blocage (21) comportent des dents (27) et lesdits moyens de retenue comportent des crans (30) anti-retour.

4. Dispositif selon l'une quelconque des revendications 1 à 3, **caractérisé en ce que** lesdits moyens d'immobilisation comportent au moins :
- une plaquette métallique (17), montée dans une cavité (34) du boîtier (15).
- et une vis métallique (18) dotée d'une tête (19), ladite vis (18) étant insérée à travers la plaquette métallique (17) dans un trou débouchant (35) et pouvant être fixée dans un orifice (20) associé de l'élément (11) à positionner de telle sorte que le câble (12) soit coincé entre la plaquette métallique (17) et ladite tête (19) de la vis (18), lorsque le câble est inséré dans le boîtier.

5. Dispositif selon la revendication 4, **caractérisé en ce que** la plaquette métallique (17) est immobile en rotation par rapport au boîtier (15).

6. Dispositif selon l'une des revendications 4 et 5, **caractérisé en ce que** la tête (19) de la vis (18) est logée dans un évidement (36) du boîtier (15).

7. Dispositif selon l'une quelconque des revendications 1 à 6, **caractérisé en ce que** le boîtier (15) est muni d'un canai de passage (32) adapté à recevoir un câble (12) comportant au moins une extrémité (33) chanfreinée, au niveau d'un bord du boîtier (15), et des portions évasées (41), débouchant au niveau dudit logement (29).

8. Dispositif selon l'une quelconque des revendications 1 à 7, **caractérisé en ce que** le boîtier (15) comporte deux parties (15a, 15b) articulées par une charnière (16) et superposées, dans une position d'utilisation, pour former au moins ledit logement (29).

9. Dispositif selon l'une quelconque des revendications 1 à 8, **caractérisé en ce que** lesdits moyens de fixation du boîtier (15) sur un élément (11) à positionner comportent deux pattes de fixation (13a, 13b) rigides et une patte de fixation (13c) flexible, destinées à s'encliqueter dans des ouvertures (14) prédéterminées d'un élément (11) à positionner.

10. Dispositif selon l'une quelconque des revendications 1 à 9, **caractérisé**
**en ce que** l'organe de blocage est une goupille (21) conformée en boucle déformable comportant une tête (24) flexible, une extrémité d'actionnement (25), pouvant venir en contact avec un câble (12) lorsque celui-ci est inséré, et deux branches latérales (26) flexibles reliant la tête (24) et l'extrémité d'actionnement (25).

## Claims

1. Device (10) for positioning a member (11) on a cable (12), including at least:
- a casing (15) into which a cable (12) can be inserted,
- and a blocking member (21) intended to immobilise a cable (12) when it is inserted in the casing (15) by deformation of the cable (12) inside the casing (15),
- a housing (29) in which the blocking member (21) is inserted so that when a cable (12) is inserted into the casing (15) the latter is disposed inside the casing (15) substantially perpendicularly relative to the housing (29),
and which also includes
- means for locking the blocking member (21) in said housing (29),
- fixing means (13) of the casing (15) enabling the latter to be fixed to a member (11) to be positioned on a cable (12),
**characterised in that** the device further includes metal immobilising means for immobilising the cable (12) when the latter is inserted in the casing (15) relative to the member (11) to be positioned on the cable (12).

2. Device according to claim 1, **characterised in that** said locking means include attachment means (27) fastened to the blocking member (21) cooperating with retaining means (30) projecting into said housing (29).

3. Device according to claim 2, **characterised in that** said attachment means of the blocking member (21) include teeth (27) and said retaining means include non-return catches (30).

4. Device according to any of claims 1 to 3, **characterised in that** said immobilising means include at
least:
- a metal plate (17) mounted in a cavity (34) of the casing (15),
- and a metal screw (18) having a head (19), said screw (18) being inserted through the metal plate (17) in an open hole (35) and being adapted to be fixed in an associated orifice (20) of the member (11) to be positioned so that the cable (12) is wedged between the metal plate (17) and said head (19) of the screw (18) when the cable is inserted into the casing.

5. Device according to claim 4, **characterised in that** the metal plate (17) is immobile in rotation relative to the casing (15).

6. Device according to either of claims 4 and 5, **characterised in that** the head (19) of the screw (18) is housed in a recess (36) of the casing (15).

7. Device according to any of claims 1 to 6, **characterised in that** the casing (15) is provided with a passage (32) adapted to receive a cable (12) having at least one chamfered end (33) at the level of an edge of the casing (15) and flared portions (41) opening into said housing (29).

8. Device according to any of claims 1 to 7, **characterised in that** the casing (15) includes two parts (15a, 15b) articulated by a hinge (16) and superposed in a position of use to form at least said housing (29).

9. Device according to any of claims 1 to 8, **characterised in that** said means for fixing the casing (15) to a member (11) to be positioned include two rigid fixing lugs (13a, 13b) and a flexible fixing lug (13c) all intended to be clipped into predetermined openings (14) of a member (11) to be positioned.

10. Device according to any of claims 1 to 9, **characterised in that** the blocking member is a pin (21) conformed as a deformable loop including a flexible head (24), an actuating end (25) adapted to come into contact with a cable (12) when the latter is inserted, and two flexible lateral branches (26) connecting the head (24) and the actuating end (25).

## Patentansprüche

1. Vorrichtung zur Positionierung (10) eines Elements (11) an einem Kabel (12) mit wenigstens
- einem Gehäuse (15), in das ein Kabel (12) eingefügt werden kann,
- und einem Blockierteil (21), das dazu eingerichtet ist, ein Kabel (12), wenn es in das Gehäuse (15) eingefügt wird, durch Verformen des Kabels (12) im Inneren des Gehäuses (15) zu blockieren,
- einer Ausnehmung (29), in die das Blockierteil (21) sich derart einfügt, dass, wenn ein Kabel (12) in das Gehäuse (15) eingefügt wird, dieses im Inneren des Gehäuses (15) etwa rechtwinklig in Bezug auf die Ausnehmung (29) angeordnet ist,
und die ebenfalls
- Verriegelungsmittel für das Blockierteil (21) in der Ausnehmung (29) und
- Befestigungsmittel (13) des Blockierteils (15) aufweist, die ein Befestigen des Blockierteils an einem an einem Kabel (12) zu positionierenden Element (11) ermöglichen,
**dadurch gekennzeichnet, dass** die Vorrichtung außerdem Metallfeststellmittel aufweist, die es ermöglichen, das Kabel (12), wenn dieses Kabel in das Gehäuse (15) eingefügt ist, in Bezug auf das an dem Kabel (12) zu positionierende Element (11) festzustellen.

2. Vorrichtung nach Anspruch 1, **dadurch gekennzeichnet, dass** die Verriegelungsmittel über einstückig mit dem Blockierteil (21) ausgebildete Einrastmittel (27) verfügen, die mit Rückhaltemitteln (30) zusammenwirken, die in der Ausnehmung (29) hervorstehen.

3. Vorrichtung nach Anspruch 2, **dadurch gekennzeichnet, dass** die Einrastmittel des Blockierteils (21) über Zähne (27) und die Rückhaltemittel über Einkerbungen (30) mit Rücklaufsperre verfügen.

4. Vorrichtung nach einem der Ansprüche 1 bis 3, **dadurch gekennzeichnet, dass** die Feststellmittel wenigstens
- eine Metallplatte (17), die in einer Austiefung (34) des Gehäuses (15) angebracht ist,
- und eine Metallschraube (18) mit einem Kopf (19) aufweisen, wobei die Schraube (18) durch die Metallplatte (17) in ein Loch (35) eingefügt wird, das in eine Öffnung (20) mündet und in dieser befestigt werden kann, die mit dem Element (11) verbunden ist, das derart zu positionieren ist, dass das Kabel (12) zwischen der Metallplatte (17) und dem Kopf (19) der Schraube (18) festgeklemmt ist, wenn das Kabel in das Gehäuse eingefügt wird.

5. Vorrichtung nach Anspruch 4, **dadurch gekennzeichnet, dass** die Metallplatte (17) bei Drehung unbeweglich in Bezug auf das Gehäuse (15) ist.

6. Vorrichtung nach einem der Ansprüche 4 bis 5, **dadurch gekennzeichnet, dass** der Kopf (19) der Schraube (18) in einer Aussparung (36) des Gehäuses (15) eingebracht ist.

7. Vorrichtung nach einem der Ansprüche 1 bis 6, **dadurch gekennzeichnet, dass** das Gehäuse (15) über einen Durchgangskanal (32) verfügt, der dazu eingerichtet ist, ein Kabel (12) aufzunehmen, und wenigstens ein abgeschrägtes Ende (33) auf der Höhe eines Rands des Gehäuses (15) sowie ausgebauchte Bereiche (41) aufweist, die auf der Höhe der Ausnehmung (29) münden.

8. Vorrichtung nach einem der Ansprüche 1 bis 7, **dadurch gekennzeichnet, dass** das Gehäuse (15) zwei Teile (15a, 15b) aufweist, die mit einem Gelenk (16) verbunden und in einer Betriebsstellung übereinander angeordnet sind, um wenigstens die Ausnehmung (29) zu bilden.

9. Vorrichtung nach einem der Ansprüche 1 bis 8, **dadurch gekennzeichnet, dass** die Befestigungsmittel des Gehäuses (15) an einem zu positionierenden Element (11) zwei starre Befestigungsnasen (13a, 13b) und eine elastische Befestigungsnase (13c) aufweisen, die dazu eingerichtet sind, in vorbestimmte Öffnungen (14) eines zu positionierenden Elements (11) einzurasten.

10. Vorrichtung nach einem der Ansprüche 1 bis 9, **dadurch gekennzeichnet, dass** das Blockierteil ein Stift (21) ist, der als verformbare Schleife geformt ist und über einen elastischen Kopf (24), über ein Betätigungsende (25), das mit einem Kabel (12) in Kontakt treten kann, wenn dieses eingefügt ist, sowie über zwei elastische seitliche Abschnitte (26) verfügt, die den Kopf (24) und das Betätigungsende (25) verbinden.
